# EUROPEAN PATENT SPECIFICATION

(11) **EP 1 666 539 B1**
(45) Date of publication and mention of the grant of the patent: **17.09.2014**
(21) Application number: 04775268.8
(22) Date of filing: 25.08.2004
(51) Int. Cl.: C09B 61/00, A23L 1/275, A23L 2/58

(54) **CARMINIC ACID COMPLEX COMPOUND, METHOD FOR THE PRODUCTION THEREOF, A FOOD PRODUCT AND BEVERAGE**
KARMINSÄUREKOMPLEXVERBINDUNG, VERFAHREN ZU IHRER HERSTELLUNG, NAHRUNGSMITTEL UND GETRÄNK
COMPOSE COMPLEXE D'ACIDE CARMINIQUE, PROCEDE DE PRODUCTION DE CE COMPOSE, PRODUIT ALIMENTAIRE ET BOISSON

(30) Priority: 03.09.2003 RU 2003126729
(43) Date of publication of application: 07.06.2006
(73) Proprietor: Open Joint Stock Company "Wimm-Bill-Dann", Moscow 127591 (RU)
(72) Inventor: UFIMKIN, Dmitry Petrovich, Moskovskaya obl., 141534 (RU); KOVALENKO, Dmitry Nikolaevich, Moskovskaya obl., 140160 (RU)
(74) Representative: Benatov, Emil Gabriel
(86) International application number: PCT/RU2004/000333
(87) International publication number: WO 2005/021659

(56) References cited:
- EP-A2- 0 838 161
- CA-A1- 1 190 785
- JP-A- 59 120 075
- KR-B1- 930 012 007
- RO-A2- 0 066 678
- US-A- 4 100 205
- US-A- 4 442 105
- US-A- 5 147 673
- US-A- 5 147 673
- US-A- 5 164 212
- US-A- 5 164 212
- US-A1- 2002 058 016
- TRILOK CHAND JAIN ET AL.: 'Spectrophotometric studies of carminic acid complexes' JOUR. INDIAN CHEM. SOC. vol. 37, no. 11, 1960, pages 727 - 730, XP008107600

## Description

### TECHNICAL FIELD

The invention relates to organic chemistry, in particular to organic pigments, to methods for the production thereof, as well as to using said pigments in the industry.

### PRIOR STATE OF THE ART

Organic pigments are used for providing more attractive appearance for processed products. Pigments are divided into two main groups: natural and synthetic pigments. Refined pigments of various plants, animals (in particular insects) and microorganisms are used as natural organic pigments. One of said food pigments is the carmine - a red pigment extracted from the bodies of wingless females of the cochineal insects.

It is known that the carminic acid is used as a pigment in the production of meat products (RF Patent No. 2166263, Class A 23 L 1/314, 2000). A disadvantage of said pigment is its low color stability (rather rapid change in the color of the product) and its application constraints owing to its low thermal stability.

A complex compound of carminic acid, nitrogenous base and organic acid (US No. 5147673, Class A 23 L 1/27, 1992) used as a pigment has been chosen as a closest analog (prototype) of the pigment claimed. Said pigment is of limited application for the pigment color is preserved in acidic medium only, and at that for a limited period determined by the pigment decomposition. Furthermore, there are products on the market nowadays, which are in demand and may be stored for quite long periods (up to a year), but at the same time the color of said pigment (as well as the color of the product, respectively) cannot be preserved for a long time.

The known method for production of a complex compound of the carminic acid to be used as a pigment, including the dissolution of carminic acid in water, addition of an adequate quantity of organic acid and nitrogenous base, heating and holding for a time period sufficient for the complex compound formation (US No. 5147673, Class A 23 L 1/27, 1992), has been chosen as a closest analog (prototype) of the method claimed. The labor intensity of said method, the low quality of the obtained pigment, the need for using nitrogen-containing bases as well as the use of an expensive organic acid limit considerably the application possibilities for said method.

A food product containing the known pigment based on the carminic acid (US No. 5147673, Class A 23 L 1/27, 1992) has been chosen as a closest analog of the food product claimed. The food product containing said pigment features low-grade consumer-related properties for its gustatory qualities, color and consistency change during storage. Moreover, not every food product may be colored by using said pigment because the known pigment on the basis of carminic acid requires the presence of acidic medium, and said pigment decomposes and loses its properties in alkaline medium.

A beverage containing the known pigment based on the carminic acid (US No. 5147673, Class A 23 L 1/27, 1992) has been chosen as a closest analog of the beverage claimed. The beverage containing said pigment features low-grade consumer-related properties for its gustatory qualities and color change during storage. Moreover, not every beverage may be colored by using said pigment because the known pigment on the basis of carminic acid requires the presence of acidic medium, and said pigment decomposes and loses its properties in alkaline medium.

The method of fruit coloring is known (US-A-5164212) that is continuous process of so called "infusion", comprising treatment of fruits with sulfurous anhydride, infusion of calcium ions, infusion of aluminium ions, and carminic acid solution at the last stage, and comprising the subsequent heating of the fruits and their dying due to forming complex compound of carminic acid insoluble in acidic medium. The complex compound of carminic acid is formed with calcium and aluminium ions, aluminium being a part of the chelate compound while calcium beign the external ion. Said compound is insoluble in acidic medium therefore its use in food industry for coloring acidulous food such as juices, nectars, beverages and the like is restricted.

The method of fruit coloring is known (JP 59 120075 A) that comprises preparatory coloring of food with carminic acid or preparations containing carmine (cochineal) and following treatment of the mixture of food with carminic acid with calcium, magnesium and aluminium salts such as calcium lactate, magnesium chloride, aluminium chloride. This coloring method comprises first coloring of food by carminic acid with subsequent treatment of food with said salts to obtain a colored food resistant to blotting during storage. Therefore there is no stage of preliminary preparation of a complex compound of carminic acid with divalent metals of MX composition. In fact the inventors make use of conventional carminic acid agents (carmine) but not specially prepared pigment comprising complex compound of carminic acid of a certain chemical composition. Introducing aluminium get complex compound of carminic acid of different chemical composition insoluble in water.

### DISCLOSURE OF THE INVENTION

The objectives of the group of inventions presented consist in creating a chemical organic compound, stable not only in time but also in various (alkaline or acidic) mediums, said compound being appropriate for use as a pigment, and in developing a method for production of said compound and compositions of food products and beverages, which comprise said compound.

To attain said objectives it is proposed a carminic acid complex compound embodied in the form of the interaction product of the carminic acid and the organic salt of a divalent metal MX, wherein M is a divalent metal selected from a group consisting of Ca, Mg, Sr, and Ba, and X is the anion of an organic acid selected from a group comprising GliP⁻, AcO⁻, Cit⁻, and Lact⁻, wherein
GliP⁻ is a glycerine-phosphoric acid anion,
AcO⁻ - acetic acid anion,
Lact⁻ - milk acid anion, and
Cit⁻ - citric acid anion,
for coloring food products.

The totality of essential features characterizing the claimed compound makes it possible to ensure the achievement of a technical result consisting in the provision of a new organic pigment, in expanding the application field of said pigment, including its use as a food pigment for a wide assortment of food products and beverages, as well as in improving the thermal and color resistance and stability of said pigment not only in time but also in various (acidic or alkaline) mediums.

In this case said technical result can be achieved by using any one of the above-enumerated organic salts of any one of indicated divalent metals in the composition of said carminic acid complex compound.

The claimed carminic acid complex compound is always colored in red, irrespective of which one of the divalent metals enters into its composition.

A particular case of the claimed carminic acid complex compound is the carminic acid complex compound with the calcium glycerophosphate having the chemical formula of C₂₅H₂₇CaO₁₉P, the use of which is preferred in coloring food products. Nevertheless, using the salts of magnesium, strontium or barium allows guaranteeing the attainment of the same technical result as that obtained with calcium salts, and the claimed carminic acid complex compound containing a salt of magnesium, strontium or barium can be used for coloring food products, too. It should be noted that the use of strontium and barium is wholly admissible if the normative requirements regarding their content in the final product are observed. For instance, the norm of strontium content in potable water is 7 mg/l, which means it is the same for beverages. In this case the intensity of beverage coloring by the claimed complex compound at that strontium content will be wholly sufficient.

To attain the indicated objectives it is also proposed a method for producing the claimed carminic acid complex compound, embodied in the form of interaction of the carminic acid and the organic salt of a divalent metal MX, wherein M is a divalent metal selected from a group consisting of Ca, Mg, Sr, and Ba, and X is the anion of an organic acid selected from a group comprising GliP⁻, AcO⁻, Cit⁻, and Lact⁻, wherein
GliP⁻ is a glycerine-phosphoric acid anion,
AcO⁻ - acetic acid anion,
Lact⁻ - milk acid anion, and
Cit⁻ - citric acid anion,
for coloring food products.

The totality of essential features characterizing the claimed method makes it possible to ensure the achievement of a technical result consisting in simplification of the method, improvement of the quality of the produced pigment, rejection of using nitrogenous bases in the pigment, labor intensity reduction, and decrease of the cost of the method.

Either one concrete organic salt of a divalent metal (any one of the above-enumerated salts of any one of indicated divalent metals), or their mixture in any combination may be used as an organic reagent.

In one particular case of embodiment the claimed method is realized in the following manner: the carminic acid is dissolved in water, the water solution of carminic acid is heated to a temperature selected within the range of 30 to 90 °C, said heated water solution is mixed with an organic reagent in the following component proportion: no less than 1 mass part of organic reagent is taken per 5 mass parts of dry carminic acid, and the mixture obtained is held for no less than a minute. As a result, a stable complex of carminic acid and organic salt of a divalent metal, intensively colored in red, is formed. Then the modified pigment may be used for the production of a product or beverage.

In another particular case of embodiment the claimed method is realized in the following manner: the carminic acid is dissolved in water, the water solution obtained is mixed with an organic reagent in a proportion within 2:1 to 1:5, the obtained mixture is heated to a temperature selected within the range of 20 to 120 °C, and said obtained mixture is held for 1 to 60 minutes. As a result, a stable complex of carminic acid and organic salt of a divalent metal, intensively colored in red, is formed. Then the modified pigment may be used for the production of a product or beverage.

It should be noted that such operations of the method as dissolving the carminic acid in water, heating and holding are not obligatory; said operations of the method guarantee the attainment of an additional technical result expressed in the acceleration of the process.

It is possible to mix at first the carminic acid powder with the organic salt (or organic salts) of a divalent metal, and then to dissolve that mixture in water and heat it.

The proportion of the carminic acid and organic salt of a divalent metal in their mixing is arbitrary - in any proportion of said components the intended properties will be realized and the technical result attained. Observing the proportions indicated for the particular cases of embodiment of the claimed method ensures the achievement of an additional technical result expressed in increasing the output of finished product.

To attain the indicated objectives it is also proposed a food product containing a pigment, where a carminic acid complex compound with an organic salt of a divalent metal MX is used as said pigment, wherein M is a divalent metal selected from a group consisting of Ca, Mg, Sr, and Ba, and X is the anion of an organic acid selected from a group comprising Glip⁻, AcO⁻, Cit⁻, and Lact⁻, wherein GliP⁻ is a glycerine-phosphoric acid anion, AcO⁻ - acetic acid anion, Lact⁻ - milk acid anion, and Cit⁻ - citric acid anion. The content of said pigment in the food product may vary from 10⁻⁴ % to 1 %.

The totality of essential features characterizing the claimed food product makes it possible to ensure the achievement of a technical result consisting in increasing the intensity of product coloring, reducing the pigment content in said product, reducing the content of nitrogenous bases in said product, expanding the assortment of products in which it will be possible to use said carminic acid complex compound in connection with its possible use in alkaline medium, permitting the performance of the necessary thermal treatment of products without any loss in their color, improving the consumer-related qualities of products containing said carminic acid complex compound in connection with the preservation of stable product color during a sufficiently long period of storing them (up to a year).

It should be noted that said technical result will be obtained by using any one of the above-enumerated complex compounds on the basis of carminic acid as a pigment in the food product. A particular case of the claimed colored food product is the food product which contains as a pigment a carminic acid complex compound with the calcium glycerophosphate.

To attain the indicated objectives it is also proposed a beverage containing a pigment, where a carminic acid complex compound with an organic salt of a divalent metal MX is used as said pigment, wherein M is a divalent metal selected from a group consisting of Ca, Mg, Sr, and Ba, and X is the anion of an organic acid selected from a group comprising GliP⁻, AcO⁻, Cit⁻, and Lact⁻, wherein GliP⁻ is a glycerine-phosphoric acid anion, AcO⁻ - acetic acid anion, Lact⁻ - milk acid anion, and Cit⁻ - citric acid anion.

The totality of essential features characterizing the claimed beverage makes it possible to ensure the achievement of a technical result consisting in increasing the intensity of beverage coloring without any increase of the pigment content in it, expanding the assortment of beverages in which it will be possible to use said carminic acid complex compound, permitting the performance of the necessary thermal treatment of beverages without any loss in their color, improving the consumer-related qualities of beverages containing said carminic acid complex compound in connection with the preservation of stable product color during a sufficiently long period of storing them (up to a year).

It should be noted that said technical result will be obtained by using any one of the above-enumerated complex compounds on the basis of carminic acid as a pigment in the beverage. A particular case of the claimed colored beverage is the beverage which contains as a pigment a carminic acid complex compound with the calcium glycerophosphate.

Using the claimed carminic acid complex compound with an organic salt of a divalent metal as a pigment makes it possible to reduce the pigment content in food products and beverages in comparison with the use of carminic acid as a pigment.

### VARIANTS OF THE INVENTION EMBODIMENT

The invention is illustrated by the following examples which, however, do not include the whole scope of the claims of said invention, and, moreover, do not impose any limitations on it.

**Example 1.** 85 g of carminic acid are dissolved in water at temperature of 50 °C and 200 g of calcium lactate powder are put into the solution obtained. The mixture is held for 10 minutes at continuous stirring, and then a stable carminic acid complex compound with the calcium lactate, intensively colored in red, is formed.

**Example 2.** A food product, for instance, a strawberry yogurt, containing 30 % of strawberry fruits and 0.001 % of pigment being a carminic acid complex compound with calcium lactate, produced through the method described in Example 1.

**Example 3.** 120 g of carminic acid are dissolved in 5 1 of hot water at temperature of 60 to 90 °C, 350 g of calcium acetate are added to the solution obtained, the mixture is stirred for 5 minutes, and then a stable carminic acid complex compound with the calcium acetate, intensively colored in red, is formed.

**Example 4.** A non-alcoholic beverage containing raspberry and a pigment being a carminic acid complex compound with the calcium acetate, produced through the method described in Example 3. The pigment content is 0.6 kg per 1000 kg of the final beverage.

**Example 5.** 45 g of carminic acid are dissolved in 1 1 of water at temperature of 45 °C, 50 g of calcium citrate are added to the solution, and the mixture is heated for 6 to 10 minutes at continuous stirring. As a result, a stable carminic acid complex compound with the calcium citrate, intensively colored in red, is formed.

**Example 6.** A food product (fruit biscuits with raspberry) containing 10 % of raspberry and 0.1 % of pigment being a carminic acid complex compound with calcium citrate, produced through the method described in Example 5.

**Example 7.** 240 g of carminic acid are dissolved in 41 of hot water at temperature of 50 to 70 °C, and 480 g of dry calcium glycerophosphate are added with stirring to the solution. Stirring goes on for 30 minutes. As a result, a stable carminic acid complex compound with the calcium glycerophosphate, intensively colored in red, is formed.

**Example 8.** A beverage, a yogurt for drinking, which contains 20 % of strawberry fruits and a pigment being a carminic acid complex compound with calcium glycerophosphate, produced through the method described in Example 7. The pigment content is 0.5 kg per 2000 kg of the final beverage.

**Example 9.** 75 g of carminic acid are dissolved in water at temperature of 40 °C and 175 g of powder of strontium acetate tetrahydrate are put into the solution obtained. The mixture is held for 15 minutes at continuous stirring, and then a stable carminic acid complex compound with the strontium acetate, intensively colored in red, is formed.

**Example 10.** A heat-treated yogurt containing 14 % of strawberry jam and a pigment being a carminic acid complex compound with strontium acetate, produced through the method described in Example 11. The strontium content is less than 7 mg per 1 kg of final product.

**Example 11.** 90 g of carminic acid are dissolved in water at temperature of 60 °C, and 90 g of magnesium lactate are put into the solution obtained. The mixture is held for 5 minutes at continuous stirring, and then a stable carminic acid complex compound with the magnesium lactate, intensively colored in red, is formed.

**Example 12.** A heat-treated yogurt containing 25 % of strawberry jam and a pigment being a carminic acid complex compound with magnesium lactate, produced through the method described in Example 11.

**Example 13.** 225 g of carminic acid are dissolved in water at temperature of 70 °C and 10 g of barium citrate powder are put into the solution obtained. The mixture is held for 20 minutes at continuous stirring, and then a stable carminic acid complex compound with the barium citrate, intensively colored in red, is formed. The compound obtained is added to 1 ton of strawberry fruits which are then used for preparation of 3 tons of strawberry jam.

**Example 14.** A heat-treated yogurt containing 18 % of jam with pigment (a carminic acid complex compound with barium citrate), produced through the method described in Example 13.

## Claims

1. A carminic acid complex compound being an interaction product of a carminic acid and an organic salt of a divalent metal MX, wherein
M is a divalent metal selected from a group consisting of Ca, Mg, Sr, and Ba, and
X is an anion of an organic acid selected from a group comprising GliP⁻, AcO⁻, Cit⁻, and Lact⁻, wherein
GliP⁻ is a glycerine-phosphoric acid anion,
AcO⁻ - acetic acid anion,
Lact⁻ - milk acid anion, and
Cit⁻ - citric acid anion,
for coloring food products.

2. A method for producing a carminic acid complex compound including interaction of a carminic acid and an organic salt of a divalent metal MX, wherein
M is a divalent metal selected from a group consisting of Ca, Mg, Sr, and Ba, and
X is an anion of an organic acid selected from a group comprising GliP⁻, AcO⁻, Cit⁻, and Lact⁻, wherein
GliP⁻ is a glycerine-phosphoric acid anion,
AcO⁻ - acetic acid anion,
Lact⁻ - milk acid anion, and
Cit⁻ - citric acid anion, for coloring food products.

3. A food product containing a pigment **characterized in that** as a pigment it contains the carminic acid complex compound in accordance with Claim 1.

4. A beverage containing a pigment **characterized in that** as a pigment it contains the carminic acid complex compound in accordance with Claim 1.

## Patentansprüche

1. Eine Komplexverbindung der Karminsäure, die ein Produkt der Wechselwirkung von Karminsäure und ein organisches Salz eines zweiwertigen Metalls MX ist, wobei
M ein zweiwertiges Metall, ausgewählt aus einer Gruppe, bestehend aus Ca, Mg, Sr und Ba ist, und
X ein Anion einer organischen Säure, ausgewählt aus einer Gruppe, umfassend GLIP⁻, AcO⁻, Cit⁻, und Lact⁻ ist, worin
GliP⁻ - ein Glycerin-Phosphorsäure-Anion ist,
AcO⁻ - Essigsäure-Anion,
Lact⁻ - Milchsäure-Anion und
Cit⁻ - Zitronensäure-Anion,
zum Einfärben von Nahrungsmitteln.

2. Verfahren zur Herstellung einer Komplexverbindung der Karminsäure einschließlich Wechselwirkung der Karminsäure und einem organischen Salz eines zweiwertigen Metalls MX, wobei
M ein zweiwertiges Metall, ausgewählt aus einer Gruppe, bestehend aus Ca, Mg, Sr und Ba ist, und
X ein Anion einer organischen Säure, ausgewählt aus einer Gruppe umfassend GLIP⁻, AcO⁻, Cit⁻, und Lact⁻ ist, worin
GliP⁻ - ein Glycerin-Phosphorsäure-Anion ist,
AcO⁻ - Essigsäure-Anion,
Lact⁻ - Milchsäure-Anion und
Cit⁻ - Zitronensäure-Anion,
zum Einfärben von Nahrungsmitteln.

3. Nahrungsmittel, enthaltend ein Pigment, **dadurch gekennzeichnet, dass** es als Pigment eine Komplexverbindung der Karminsäure, gemäß Anspruch 1, enthält.

4. Ein Getränk, enthaltend ein Pigment, **dadurch gekennzeichnet, dass** es als Pigment eine Komplexverbindung der Karminsäure, gemäß Anspruch 1, enthält.

## Revendications

1. Un composé complexe d'acide carminique résultant de l'interaction de l'acide carminique et un sel organique MX d'un métal divalent, dans lequel
M est un métal divalent choisi dans le groupe constitué de Ca, Mg, Sr et Ba, et
X est un anion d'acide organique choisi dans un groupe comprenant GLIP⁻, ACO⁻, Cit⁻ et Lact⁻, dans lequel
GLIP- - est un anion de l'acide glycérine-phosphorique,
AcO⁻ - est un anion de l'acide acétique,
Lait⁻ - est un anion de l'acide lactique, et
Cit⁻ - est un anion de l'acide citrique,
pour la coloration de produits alimentaires.

2. Un procédé de production d'un composé complexe d'acide carminique comprenant l'interaction de l'acide carminique et un sel organique MX d'un métal divalent, dans lequel
M est un métal divalent choisi dans le groupe constitué de Ca, Mg, Sr et Ba, et
X est un anion d'acide organique choisi dans un groupe comprenant GLIP⁻, ACO⁻, Cit⁻ et Lact⁻, dans lequel
GLIP⁻ - est un anion de l'acide glycérine-phosphorique,
AcO⁻ - est un anion de l'acide acétique,
Lait⁻ - est un anion de l'acide lactique, et
Cit⁻ - est un anion de l'acide citrique,
pour la coloration de produits alimentaires.

3. Un produit alimentaire contenant un pigment **caractérisé en ce qu'**il contient en tant que pigment le composé complexe d'acide carminique selon la revendication 1.

4. Une boisson contenant un pigment **caractérisée en ce qu'**elle contient en tant que pigment le composé complexe d'acide carminique selon la revendication 1.
